# EUROPÄISCHE PATENTSCHRIFT

(11) **EP 2 382 272 B1**
(45) Veröffentlichungstag und Bekanntmachung des Hinweises auf die Patenterteilung: **27.03.2013**
(21) Anmeldenummer: 10701362.5
(22) Anmeldetag: 26.01.2010
(51) Int. Cl.: C08L 83/04, C08K 5/057, C08K 5/00, C08K 5/54

(54) **ALKOXYVERNETZENDE KAUTSCHUKMISCHUNGEN MIT NIOB- ODER TANTAL-KONDENSATIONSKATALYSATOREN**
ALKOXY-CROSSLINKING RUBBER MIXTURES COMPRISING NIOBIUM OR TANTALUM CONDENSATION CATALYSTS
MÉLANGES DE CAOUTCHOUC À RÉTICULATION ALCOXY AVEC CATALYSEURS DE CONDENSATION À BASE DE TANTALE OU DE NIOBIUM

(30) Priorität: 02.02.2009 DE 102009000556
(43) Veröffentlichungstag der Anmeldung: 02.11.2011
(73) Patentinhaber: Wacker Chemie AG, 81737 München (DE)
(72) Erfinder: ROSCHER, Anja, 81379 München (DE); EBERLE, Hans-Jürgen, 81477 München (DE); HOFMANN, Marco, 84489 Burghausen (DE); SCHEIM, Uwe, 01640 Coswig (DE)
(74) Vertreter: Fritz, Helmut
(86) Internationale Anmeldenummer: PCT/EP2010/050850
(87) Internationale Veröffentlichungsnummer: WO 2010/086299

(56) Entgegenhaltungen:
- JP-A- 2007 131 799
- US-A- 4 525 565

## Beschreibung

Die Erfindung betrifft mit Feuchtigkeit vernetzende Kautschukmischungen, die eine Niob- oder Tantalverbindung und Polymere mit Alkoxysilylendgruppen enthalten.

Unter Ausschluss von Wasser lagerfähige, bei Zutritt von Wasser bei Raumtemperatur zu Elastomeren vernetzende Siliconkautschukmischungen, insbesondere Einkomponenten-Siliconkautschukmischungen (RTV-1) sind seit langem bekannt.

Diese Produkte werden in großen Mengen z.B. als Fugendichtmassen in der Bauindustrie eingesetzt. RTV-1 Systeme enthalten im Allgemeinen ein polymeres, meist lineares Siloxan, eine vernetzend wirkende Verbindung, die leicht hydrolysierbare Gruppen enthält, einen Weichmacher und gegebenenfalls weitere Zusätze wie einen Vernetzungskatalysator,
Verarbeitungshilfsstoffe, Pigmente und Füllstoffe. Als Vernetzungskatalysatoren werden derzeit überwiegend Sn-Katalysatoren wie z.B. Dibutylzinndiacetat oder -laurat eingesetzt. Aufgrund ihrer neueren toxikologischen Einstufung werden diese Zinnderivate jedoch immer kritischer bewertet und die erlaubten eingesetzten Mengen regelmäßig herabgesetzt. Der Einsatz von Sn-Katalysatoren in Elastomeren, die mit Nahrungsmitteln, Pharmazeutika oder Prothesen in Kontakt kommen, ist daher verboten. Es ist nicht auszuschließen, dass Sn-haltige Katalysatorsysteme mittel- oder langfristig vollständig verboten werden. Es besteht daher ein Bedarf an Systemen, die ohne Zinn-Katalysatoren verarbeitet werden können, die aber gleichzeitig ein zu konventionellen Zinn-Systemen vergleichbares Aushärteverhalten aufweisen.

In der Patentliteratur sind bereits verschiedene Sn-freie Katalysatorsysteme, v.a. mit Ti- und Zr-Verbindungen bekannt. So wird in US 3,334,067 der Einsatz von Katalysatoren wie Ti(OiPr)₂(acac)₂ oder Titan-diisopropoxy-bis(ethylacetoacetat) beschrieben, die im Vergleich zu Standard-Sn-Katalysatoren eine verbesserte Lagerstabilität aufweisen. Weitere Titan-Chelatverbindungen sind u.a. in US 3,542,901, erwähnt. Nachteile dieser Katalysatortypen ergeben sich aus der Gelbverfärbung und der Unverträglichkeit mit aminischen Haftvermittlern. In EP 102,268 ist die Verwendung von Titan-Siloxy-Verbindungen, wie Ti(OSiMe₃)₄ oder Ti(OSiMe₃)₂(On-Bu)₄ bzw. Zr-Alkoxiden, wie Zr(On-Bu)₄ beansprucht. Ferner kommen Siloxy-substituierte Zr-Verbindungen in JP 2004-238617A als Kondensationskatalysatoren zum Einsatz. Äußerst hydrolyseempfindliche Niob und Tantal-Alkoxy-Verbindungen der allgemeinen Formel
M(OR)₅ M = Nb, Ta R = Alkyl
sind in JP 2007-131799 A beschrieben.

Allen diesen Sn-freien Verbindungen ist gemein, dass gegenüber den gängigen Sn-Systemen nachteilige Eigenschaften bestehen, wie etwa eine Färbung der Kautschukmassen oder eine zu hohe Hydrolyseempfindlichkeit oder zu geringe Lagerstabilität.

Der vorliegenden Erfindung liegt die Aufgabe zugrunde, Sn-freie alkoxyvernetzende Kautschukmischungen bereitzustellen, die toxikologisch unbedenklich sind und zu einer genügend hohen Geschwindigkeit und klebfreien Aushärtung führen.

Gegenstand der Erfindung sind alkoxyvernetzende Kautschukmischungen (M), die eine Verbindung der allgemeinen Formel (1)

M(OR¹)ₙ(OSiR²₃)₅₋ₙ (1),

und Polymere mit Endgruppen der allgemeinen Formel (2)

-SiR³ₐ(OR⁴)₃₋ₐ (2),

enthalten, wobei
- **M**: die Bedeutung Nb oder Ta,
- **R¹, R², R³** und **R⁴**: Kohlenwasserstoffreste mit 1 bis 10 Kohlenstoffatomen,
- **n**: die Werte 1, 2 3 oder 4 und
- **a**: die Werte 0 oder 1 bedeuten.

Die mit Feuchtigkeit, insbesondere Luftfeuchtigkeit alkoxyvernetzenden Kautschukmischungen (M) sind Sn-frei, toxikologisch unbedenklich und zeigen eine genügend hohe Reaktionsgeschwindigkeit und klebfreie Aushärtung.

Die Nb- und Ta-Verbindungen der allgemeinen Formel (1) sind zudem hydrolysestabiler als die verwandten in JP 2007-131799 A beschriebenen organofunktionellen Niob- und Tantalverbindungen.

Die Kohlenwasserstoffreste **R¹, R², R³** und **R⁴** können substituiert, insbesondere halogensubstituiert, linear, zyklisch, verzweigt, aromatisch, gesättigt oder ungesättigt sein. Vorzugsweise weisen die Kohlenwasserstoffreste **R¹, R², R³** und **R⁴** 1 bis 6 Kohlenstoffatome auf, besonders bevorzugt sind Alkylreste und Phenylreste. Bevorzugte Halogensubstituenten sind Fluor und Chlor. Besonders bevorzugte sind Methyl, Ethyl, Propyl und Phenyl.

Die Herstellung der Nb- und Ta-Verbindungen der allgemeinen Formel (1) wurde bereits beschrieben (D.C. Bradley, I.M. Thomas, JCS, 1959, 3404-3411). So kann beispielsweise Nb(OSiEt₃)₅ oder Ta(OSiEt₃)₅ durch Umsetzung von Nb(OEt)₅ oder Ta(OEt)₅ mit Triethylsilanol erhalten werden.

Die Nb- und Ta-Verbindungen der allgemeinen Formel (1) werden als Vernetzungskatalysatoren üblicherweise in Mengen von mindestens 0,1 Gew.-%, insbesondere mindestens 0,5 Gew.-% und vorzugsweise höchstens 10 Gew.-%, insbesondere höchstens 3 Gew.-%, jeweils bezogen auf die Gesamtmischung (M) zugesetzt.

Die alkoxyvernetzenden Kautschukmischungen (M) sind beliebige Mischungen, die unter Abspaltung von Alkoholen aus Alkoxysilylendgruppen zu Elastomeren vernetzbar sind. Beispiele hierfür sind Mischungen auf der Grundlage von Alkoxysilylendgruppen aufweisenden Polyorganosiloxanen, Polyethern, Polyestern, Polyurethanen, Polyharnstoffen und Copolymeren aus Polyorganosiloxanen, Polyethern, Polyestern, Polyurethanen und Polyharnstoffen.

Die beschriebenen Nb- und Ta-Verbindungen der allgemeinen Formel (1) weisen sehr gute Eigenschaften als Kondensationskatalysatoren bei der Vernetzung von α,ω-OH-funktionellen Polydimethylsiloxanen mit einem alkoxyfunktionellen Vernetzer auf. Die Verbindungen der allgemeinen Formel (1) gewährleisten eine gute Lagerstabilität von RTV-1 Systemen. Deshalb sind die alkoxyvernetzenden Kautschukmischungen (M) vorzugsweise einkomponentige Silicon-Kautschukmischungen (RTV-1 Mischungen).

Die RTV-1 Mischungen (M) enthalten als Polymere mit Endgruppen der allgemeinen Formel (2) vorzugsweise Alkoxy-terminierte Polyorganosiloxane der allgemeinen Formel (3)

(R⁴O)₃₋ₐR³aSiO(SiR₂O)ₘSiR³ₐ(OR⁴)₃₋ₐ, (3),

worin a, **R³** und **R⁴** die vorstehend definierten Bedeutungen aufweisen,
**R** die Bedeutungen von **R³** hat und
m Werte von 20 bis 2000 annimmt.

Alkoxy-terminierte Polyorganosiloxane der allgemeinen Formel (3) können hergestellt werden durch Umsetzung von mindestens einem Hydroxy-terminierten Polyorganosiloxan der allgemeinen Formel (4),

HO(SiR₂O)ₘH (4),

mit mindestens einem Alkoxysilan der allgemeinen Formel (5)

R³ₐSi(OR⁴)₄₋ₐ, (5),

worin **a, m, R, R³** und **R⁴** die oben angegebenen Bedeutungen aufweisen.

Während der dabei stattfindenden Kondensation (Abspaltung von Alkohol) wird das gewünschte Alkoxy-terminierte Polyorganosiloxan der allgemeinen Formel (3) gebildet.

Üblicherweise werden für diese Umsetzung Dihydroxypolydimethylsiloxane eingesetzt, wobei **R** die Bedeutung Methyl aufweist. Bevorzugte Alkoxysilane sind z.B. Methyltrimethoxysilan und Vinyltrimethoxysilan.

Die Alkoxy-terminierten Polyorganosiloxane der allgemeinen Formel (3) besitzen vorzugsweise eine Viskosität von mindestens 100 mPa·s, insbesondere mindestens von 20000 mPa·s und vorzugsweise höchstens 700000 mPa·s, insbesondere höchstens 350000 mPa·s, jeweils gemessen bei 25° C.

Vorzugsweise enthalten die RTV-1 Mischungen (M) mindestens 35, insbesondere mindestens 45 Gew.-% und vorzugsweise höchstens 80, insbesondere höchstens 70 Gew.-% Polyorganosiloxane der allgemeinen Formel (3).

Die RTV-1 Mischungen (M) enthalten vorzugsweise Vernetzer, Weichmacher, Füllstoffe und gegebenenfalls andere bekannte Zusätze wie Stabilisatoren und Pigmente.

Beispiele für Füllstoffe für die Mischungen (M) sind nicht verstärkende Füllstoffe, also Füllstoffe mit einer BET-Oberfläche von bis zu 50 m²/g, wie carbonsäurebelegte Kreiden, Quarz, Diatomeenerde, Calciumsilikat, Zirkoniumsilikat, Zeolithe, Metalloxidpulver wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g wie pyrogen hergestellte Kieselsäure, gefällte Kieselsäure, Ruß wie Furnace- und Acetylenruß und Silicium-Aluminium-Mischoxide großer BET-Oberfläche; faserförmige Füllstoffe wie Asbest sowie Kunststofffasern.

Die genannten Füllstoffe können hydrophobiert sein, beispielsweise durch die Behandlung mit Organosilanen bzw. - siloxanen oder mit Stearinsäure oder durch Veretherung von Hydroxylgruppen zu Alkoxygruppen. Es kann eine Art von Füllstoff, es kann auch ein Gemisch von mindestens zwei Füllstoffen eingesetzt werden.

Zur Erzielung bestimmter mechanischer Eigenschaften werden den RTV-1 Mischungen (M) Füllstoffe mit hoher spezifischer Oberfläche zugesetzt, wie pyrogene Kieselsäure oder gefälltes Calciumcarbonat.

Bei alleiniger Verwendung von verstärkender Kieselsäure als Füllstoff können transparente RTV-1-Alkoxymassen hergestellt werden.

Vorzugsweise enthalten die Mischungen (M), insbesondere die RTV-1 Mischungen (M) mindestens 2, insbesondere mindestens 5 Gew.-% und vorzugsweise höchstens 40, insbesondere höchstens 15 Gew.-% Füllstoff.

Als Weichmacher für die RTV-1 Mischungen (M) können beispielsweise Alkylaromaten oder bei Raumtemperatur flüssige, durch Trimethylsiloxygruppen endblockierte Dimethylpolysiloxane eingesetzt werden.

Bevorzugt ist die Anwesenheit von Silanen, insbesondere aminoalkyl-, säureanhydrid- und epoxifunktionellen Silanen als Haftvermittler.

Vorzugsweise enthalten die Mischungen (M) mindestens 0,5 Gew.-% und höchstens 5 Gew.-%, insbesondere höchstens 3 Gew.-% Haftvermittler.

Weichmacher in Mischungen (M), insbesondere RTV-1 Mischungen (M) sind bevorzugt methylterminierte Polydimethylsiloxane mit Viskositäten von 0,1 bis 1 Pa·s. Es ist aber auch möglich, andere organische Verbindungen wie z.B. bestimmte Mineralöle als Weichmacher einzusetzen. In den Mischungen (M) können außer den genannten Komponenten je nach Verwendungszweck alle weiteren Stoffe eingesetzt werden, die auch bisher bei ähnlichen Kondensationsreaktionen eingesetzt wurden.

Alle vorstehenden Symbole der vorstehenden Formeln weisen ihre Bedeutungen jeweils unabhängig voneinander auf. In allen Formeln ist das Siliziumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) und einer Temperatur von 20°C durchgeführt.

### Beispiel 1: Kondensationavernetzung eines α,ω-OH-funktionellen Polydimethylsiloxans mit einem alkoxyfunktionellen Vernetzer unter Verwendung der siloxyfunktionellen Verbindung Ta(OEt)₄(OSiMe₃).

In einem Kolben werden 3 g eines α,ω-OH-funktionellen Polydimethylsiloxans mit einer Viskosität von 80000 mPas bei 25 °C (25 Gew.-%) mit 9 g Toluol (75 Gew.-%), 0,24 g Vinyltrimethoxysilan (2 Gew.-%) und 30 mg Ta(OEt)₄(OSiMe₃) (1 Gew.-% Katalysator) vermischt. Man erhält eine klare, homogene Masse, die nach 20 min vollständig vernetzt ist und zu einem klebfreien Elastomer führt.

### Beispiel 2:

Bei einer erneuten Anwendung mit 3 g eines α,ω-OH-funktionellen Polydimethylsiloxans mit einer Viskosität von 80000 mPas bei 25 °C (25 Gew.-%), 9 g Toluol (75 Gew.-%), 0.24 g Vinyltrimethoxysilan (2 Gew.-%) und 30 mg Ta(OEt)₂(OSiMe₃)₃ (1 Gew.-% Katalysator) liegt eine vollständig vernetzte Masse nach 6 h vor.

### Vergleichsbeispiel mit Ta(OEt)₅:

In einem Kolben werden 3 g eines α,ω-OH-funktionellen Polydimethylsiloxans (25 Gew.-%) mit 9 g Toluol (75 Gew.-%), 0.24 g Vinyltrimethoxysilan (2 Gew.-%) und 30 mg Ta(OEt)₅ (1 Gew.-% Katalysator) vermischt. Man erhält eine klare, homogene Masse, die nach 16 h vollständig und klebfrei vernetzt ist.

### Zusammensetzung einer RTV1-Grundmischung:

Eine RTV1-Grundmischung bestehend aus 100 Gew.-Teilen eines α,ω-OH-funktionellen Polydimethylsiloxans mit einer Viskosität von 80000 mPas bei 25 °C, 40 Gew.-Teilen eines Polydimethylsiloxans mit -OSi(CH₃)₃-Endgruppen (Viskosität 1000 mPa·s bei 25 °C), 3 Gew.-Teilen Vinyltriethoxysilan und 3 Gew.-Teilen Morpholino-methyl-triethoxysilan wurde in den nachfolgenden Beispielen mit unterschiedlichen Vernetzungskatalysatoren versetzt. Die Aushärtung wurde über 24 h verfolgt.

### Beispiel 3:

Mit dieser RTV1-Grundmischung und 1 Gew.-Teil Ta(OEt)₂(OSiMe₃)₃ erhält man nach 18 h bei Raumtemperatur ein vollständig vernetztes und klebfreies Elastomer.

### Beispiel 4:

Mit dieser RTV1-Grundmischung und 1 Gew.-Teil Ta(OEt)₄(OSiMe₃) erhält man nach 18 h bei Raumtemperatur ein vollständig vernetztes klebfreies Elastomer.

### Vergleichsbeispiel mit Ta(OEt)₅:

Mit dieser RTV1-Grundmischung und 1 Gew.-Teil Ta(OEt)₅ erhält man nach 72 h bei Raumtemperatur ein vollständig vernetztes klebfreies Elastomer.

## Patentansprüche

1. Alkoxyvernetzende Kautschukmischungen (M), die eine Verbindung der allgemeinen Formel (1)
M(OR¹)ₙ(OSiR²₃) ₅₋ₙ (1),
und Polymere mit Endgruppen der allgemeinen Formel (2)
-SiR³ₐ(OR⁴)₃₋ₐ (2),
enthalten, wobei
**M** die Bedeutung Nb oder Ta,
**R¹, R², R³** und **R⁴** Kohlenwasserstoffreste mit 1 bis 10 Kohlenstoffatomen,
n die Werte 1, 2 3 oder 4 und
**a** die Werte 0 oder 1 bedeuten.

2. Alkoxyvernetzende Kautschukmischungen (M) nach Anspruch 1, bei denen die Kohlenwasserstoffreste **R¹** ausgewählt werden aus Methyl, Ethyl, Propyl und Phenyl.

3. Alkoxyvernetzende Kautschukmischungen (M) nach Anspruch 1 oder 2, bei denen die Kohlenwasserstoffreste **R²** ausgewählt werden aus Methyl, Ethyl, Propyl und Phenyl.

4. Alkoxyvernetzende Kautschukmischungen (M) nach Anspruch 1 bis 3, bei denen die Nb- und Ta-Verbindungen der allgemeinen Formel (1) in Mengen von 0,1 Gew.-% bis 10 Gew.-%, jeweils bezogen auf die Gesamtmischung (M) zugesetzt werden.

5. Alkoxyvernetzende Kautschukmischungen (M) nach Anspruch 1 bis 4, welche einkomponentige Silicon-Kautschukmischungen (RTV-1 Mischungen) sind.

6. Alkoxyvernetzende Kautschukmischungen (M) nach Anspruch 1 bis 5, bei denen die Polymere mit Endgruppen der allgemeinen Formel (2) Alkoxy-terminierte Polyorganosiloxane der allgemeinen Formel (3)
(R⁴O)₃₋ₐR³ₐSiO(SiR₂O)ₘSiR³ₐ(OR⁴)₃₋ₐ, (3),
sind, worin **a, R³** und **R⁴** die in Anspruch 1 definierten Bedeutungen aufweisen,
**R** die Bedeutungen von **R³** hat und
**m** Werte von 20 bis 2000 annimmt.

7. Alkoxyvernetzende Kautschukmischungen (M) nach Anspruch 6, bei denen **R** die Bedeutung Methyl aufweist.

## Claims

1. Alkoxy-crosslinking rubber mixtures (M) which comprise a compound of the general formula (1)
M(OR¹)ₙ(OSiR²₃)₅₋ₙ (1),
and polymers having terminal groups of the general formula (2)
-SiR³ₐ(OR⁴)₃₋ₐ (2),
where
**M** is defined as Nb or Ta,
**R¹, R², R³** and **R⁴** are defined as hydrocarbon moieties having from 1 to 10 carbon atoms,
**n** is defined as the value 1, 2, 3, or 4, and
**a** is defined as the value 0 or 1.

2. Alkoxy-crosslinking rubber mixtures (M) according to Claim 1, in which the hydrocarbon moieties **R¹** are selected from methyl, ethyl, propyl, and phenyl.

3. Alkoxy-crosslinking rubber mixtures (M) according to Claim 1 or 2, in which the hydrocarbon moieties **R²** are selected from methyl, ethyl, propyl, and phenyl.

4. Alkoxy-crosslinking rubber mixtures (M) according to any of Claims 1 to 3, in which the amounts added of the Nb compounds and Ta compounds of the general formula (1) are from 0.1% by weight to 10% by weight, based in each case on the entire mixture (M).

5. Alkoxy-crosslinking rubber mixtures (M) according to any of Claims 1 to 4, which are single-component silicone rubber mixtures (RTV-1 mixtures).

6. Alkoxy-crosslinking rubber mixtures (M) according to any of Claims 1 to 5, in which the polymers having terminal groups of the general formula (2) are alkoxy-terminated polyorganosiloxanes of the general formula (3)
(R⁴O)₃₋ₐR³ₐSiO (SiR₂O)ₘSiR³ₐ(OR⁴)₃₋ₐ, (3),
in which **a, R³,** and **R⁴** are defined as in Claim 1,
**R** is defined as for **R³,** and
**m** assumes values from 20 to 2000.

7. Alkoxy-crosslinking rubber mixtures (M) according to Claim 6, in which **R** is defined as methyl.

## Revendications

1. Mélanges de caoutchouc à réticulation alcoxy (M), contenant un composé de formule générale (1)
M (OR¹)ₙ(OSiR²3)₅₋ₙ (1)
et des polymères à groupes terminaux de formule générale (2)
-SiR³ₐ(OR⁴)₃₋ₐ (2),
M signifiant Nb ou Ta,
R¹, R², R³ et R⁴ signifiant des radicaux hydrocarbonés de
1 à 10 atomes de carbone,
n signifiant les valeurs 1, 2, 3 ou 4 et
a signifiant les valeurs 0 ou 1.

2. Mélanges de caoutchouc à réticulation alcoxy (M) selon la revendication 1, dans lesquels les radicaux hydrocarbonés R¹ sont choisis parmi méthyle, éthyle, propyle et phényle.

3. Mélanges de caoutchouc à réticulation alcoxy (M) selon la revendication 1 ou 2, dans lesquels les radicaux hydrocarbonés R² sont choisis parmi méthyle, éthyle, propyle et phényle.

4. Mélanges de caoutchouc à réticulation alcoxy (M) selon les revendications 1 à 3, dans lesquels les composés de Nb et Ta de formule générale (1) sont ajoutés en quantités de 0,1 % en poids à 10 % en poids, à chaque fois par rapport au mélange total (M).

5. Mélanges de caoutchouc à réticulation alcoxy (M) selon les revendications 1 à 4, qui sont des mélanges de caoutchouc de silicone monocomposants (mélanges RTV-1).

6. Mélanges de caoutchouc à réticulation alcoxy (M) selon les revendications 1 à 5, dans lesquels les polymères à groupes terminaux de formule générale (2) sont des polyorganosiloxanes à terminaison alcoxy de formule générale (3)
(R⁴O)₃₋ₐR³SiO (SiR₂O)ₘSiR³, (OR⁴)₃₋ₐ (3),
a, R³ et R⁴ ayant les significations définies dans la revendication 1,
R ayant les significations de R³ et
m prenant des valeurs de 20 à 2 000.

7. Mélanges de caoutchouc à réticulation alcoxy (M) selon la revendication 6, dans lesquels R signifie méthyle.
